# DEMANDE DE BREVET EUROPEEN

(11) **EP 2 527 068 A1**
(43) Date de publication de la demande: **28.11.2012**
(21) Numéro de dépôt: 11167588.0
(22) Date de dépôt: 26.05.2011
(51) Int. Cl.: B23D 45/02, B23D 47/04, B23D 45/14, B27B 5/20

(54) **Scie automatique pour réaliser des empannons**

(71) Demandeur: Ateliers Debelle (ESTOM), 7190 Ecaussinnes (Marche-lez-Ecaussinnes) (BE)
(72) Inventeur: Ghysels, Jacques, 7070 MIGNAULT (BE); Dever, Jean-Michel, 7070 MIGNAULT (BE)
(74) Mandataire: Coulon, Ludivine

(57) **Abrégé**

Scie automatique à empannons (1) agencée pour être assemblée à une scie automatique à lames multiples (2) comprenant des moyens de préhension (20) agencés pour saisir un élément en bois (B) provenant d'un convoyeur (22) de ladite scie automatique à lames multiples (21), un chariot moteur relié à une scie circulaire (3) dont le plan de coupe est perpendiculaire à l'axe longitudinal du chariot moteur (2), ledit chariot moteur (2) étant déplaçable dans les trois dimensions de l'espace; un rail de guidage rectiligne (4), dans lequel se déplace une pièce mobile (5) reliée audit chariot moteur (2); et un rail de guidage au moins partiellement circulaire (6), dans lequel circule ledit chariot moteur (2) relié à ladite pièce mobile.

## Description

La présente invention concerne le domaine des scies à lames multiples également appelées scies multilames. Typiquement, ces scies sont munies d'un convoyeur sur lequel des éléments de bois sont amenés afin d'être sciés à leur extrémité. Dans le modèle le plus fréquent, on trouve de part et d'autre du convoyeur, deux scies circulaires.

La première scie circulaire permet de couper l'élément de bois à la taille voulue, généralement de manière perpendiculaire par rapport à l'axe longitudinal de l'élément de bois. La deuxième scie circulaire présente un point de pivot et peut donc être inclinée de manière à réaliser une coupe à onglet. Les éléments de bois qui sont obtenus sont généralement utilisés dans la fabrication des charpentes de maison présentant un toit à deux versants.

Lorsqu'un toit comporte deux versants, les côtés latéraux sont généralement réalisés en briques et la charpente comporte un arêtier de faîte qui est la poutre se trouvant au sommet de la charpente. Des éléments de bois seront donc fixés sur la base du toit et sur l'arêtier. Ces éléments de bois sont donc systématiquement coupés avec une ou deux extrémités en onglet, en fonction de la géométrie du toit.

Lorsqu'un toit plus complexe doit être construit, par exemple dans le cas d'un toit à quatre versants, les éléments de bois présentent pratiquement tous des longueurs différentes et doivent parfois comporter des coupes en empannons.

À l'heure actuelle, les scies multilames ou à lames multiples, pour pouvoir produire un ensemble d'éléments de bois pour une charpente complète, présentent d'un côté du convoyeur un module fixe et un module mobile. Le module fixe comprend par exemple deux scies circulaires (la première servant à la mise à longueur et coupant l'élément de bois de manière sensiblement perpendiculaire par rapport à l'axe longitudinal de l'élément de bois ; la deuxième servant à réaliser la coupe en onglet dans un plan incliné par rapport à l'axe longitudinal de l'élément de bois). Le module mobile est déplaçable le long de l'axe longitudinal de l'élément de bois à couper et comporte également par exemple deux scies circulaires ayant le même rôle que dans le module fixe. Le déplacement du module mobile, le long de l'axe longitudinal de l'élément de bois, est contrôlée par une interface ayant préalablement reçu toutes les informations de la structure du toit. Ceci signifie qu'à la sortie du convoyeur, un ensemble d'éléments de bois de différentes longueurs et présentant des onglets différents peut être récupéré, manuellement ou au moyen d'un empileur.

Malheureusement, comme mentionné précédemment, dans le cas de structures de toit plus complexes, par exemple à 3, 4, ou encore plus de 4 versants, des coupes en empannons doivent être réalisées pour assurer la jonction entre les divers éléments de bois une fois qu'ils sont montés sur une charpente. Aujourd'hui, un triage manuel est effectué parmi les éléments de bois de l'ensemble susdit et la coupe en empannons est réalisée manuellement sur les éléments de bois sélectionnés. Une fois la coupe à empannons réalisée, les éléments de bois sont replacés dans leur ensemble et envoyés en lots sur le site de chantier où la charpente doit être montée.

Comme on peut le constater, une telle étape de triage manuel demande du temps et de la disponibilité d'un ou plusieurs manoeuvre(s) pour la réaliser. De plus, pendant l'opération de coupe à empannons, l'ensemble des éléments de bois occupe un espace, par exemple sur un empileur, ce qui nécessite l'arrêt du fonctionnement de la scie multilame. De ceci il ressort qu'il existe un besoin non négligeable d'optimaliser le processus de coupe d'éléments de bois pour former une charpente, et ceci d'autant plus que le passage des éléments de bois dans la scie multilame est un procédé aujourd'hui totalement automatisé. Il est donc archaïque de recourir à des étapes de coupe manuelle pour réaliser les empannons en extrayant des éléments de bois se trouvant dans un ensemble généré de manière automatique pour améliorer le rendement du procédé de coupe.

La présente invention a donc pour but de résoudre au moins partiellement ce problème en procurant une scie automatique à empannons.

La présente invention se rapporte donc à une scie automatique à empannons agencée pour être assemblée à une scie automatique à lames multiples comprenant
- des moyens de préhension commandés par des moyens de commande agencés pour saisir un élément en bois provenant d'un convoyeur de ladite scie automatique à lames multiples et présentant au moins une extrémité sciée transversalement par rapport à un axe longitudinal dudit élément de bois, perpendiculairement ou en oblique,
- un chariot moteur relié à une scie circulaire dont le plan de coupe est perpendiculaire à l'axe longitudinal du chariot moteur, ledit chariot moteur étant déplaçable dans les trois dimensions de l'espace,
- un rail de guidage rectiligne, dans lequel se déplace une pièce mobile reliée audit chariot moteur agencé pour guider ladite scie circulaire lors de la coupe d'empannon, ledit rail de guidage rectiligne étant positionné optionnellement automatiquement par les moyens de commandes dans l'orientation de la pente de ladite extrémité sciée transversalement, ladite pièce mobile étant commandée par lesdits moyens de commande,
- un rail de guidage au moins partiellement circulaire, dans lequel circule ledit chariot moteur relié à ladite pièce mobile, ladite pièce mobile étant solidaire dudit rail de guidage au moins partiellement circulaire dans lequel ledit chariot moteur circule, et dont le positionnement est dicté par lesdits moyens de commandes, pour procurer un plan de coupe en empannons auxdits éléments de bois.

Comme on peut le constater, la scie automatique a empannons selon la présente invention comportent des moyens de commande qui permette de sélectionner les éléments de bois provenant d'un convoyeur d'une scie à lames multiples parmi l'ensemble d'éléments de bois sciés à dimension ainsi produit. Les éléments de bois sélectionnés sont alors les uns après les autres immobilisés par les moyens de préhension et acheminés à un site de coupe où la scie circulaire, reliée au chariot moteur, effectue la coupe à empannons guidée par le rail de guidage rectiligne lors de la coupe. La scie automatique à empannons permet avantageusement d'orienter la lame de la scie circulaire dans les trois dimensions de l'espace et de calculer de manière très précise la position de la lame de la scie circulaire pour réaliser la coupe à empannons prédéterminée et donc codée dans lesdits moyens de commandes.

La scie automatique à empannons suivant l'invention est particulièrement surprenante en ce que l'élément de bois reste dans une position sensiblement horizontale tandis que la lame de la scie circulaire reliée au chariot moteur est quant à elle orientée dans les trois dimensions par l'intermédiaire du rail de guidage rectiligne et du rail de guidage au moins partiellement circulaire. Le rail de guidage rectiligne permet de prendre l'inclinaison de l'onglet réalisé sur l'élément de bois. Le rail de guidage au moins partiellement circulaire permet de renverser le moteur de gauche à droite pour procéder à une coupe gauche ou une coupe droite. Le positionnement du chariot moteur sur ce rail de guidage au moins partiellement circulaire correspond à un angle de coupe qui peut être mesuré et réglé par lesdits moyens de commandes. La pièce mobile reliée au chariot moteur est déplacée dans le rail de guidage rectiligne et permet de guider la lame de coupe. Le mouvement de ce chariot moteur est assuré dans une direction qui correspond à la direction de pénétration de la lame dont ledit élément de bois.

Avantageusement, ledit rail de guidage rectiligne est orienté par une glissière courbe, par exemple partiellement circulaire pour être positionnée dans l'orientation de l'onglet réalisé sur l'élément de bois de préférence automatiquement. Le rail de guidage rectiligne est de préférence relié à ladite glissière par un élément de connexion.

Dans une forme de réalisation préférentielle, la scie automatique à empannons selon la présente invention comprend en outre un support guidé sur au moins un rail perpendiculaire au sens d'avancement dudit élément en bois, provenant du convoyeur.

De cette façon, la scie automatique à empannons selon la présente invention est montée sur un rail afin de pouvoir s'escamoter lorsqu'elle n'est pas nécessaire et afin de pouvoir ajuster la position en fonction du point 0 dudit élément de bois. Le point 0 étant le point de référence à partir duquel la coupe doit être effectuée. Généralement, dans les techniques connues, le point de référence est nécessairement le bord du bois. Selon la présente invention, le point de référence 0 peut-être un point virtuel éloigné du bord du bois de façon à garder le plus de matière possible sur ledit élément de bois et donc pour éviter le gaspillage.

Dans une forme de réalisation particulièrement préférentielle, dans la scie automatique à empannons selon la présente invention, ledit au moins un rail perpendiculaire est une glissière à recirculation de billes posée au sol, ledit support étant agencé pour rouler sur ces glissières et être entraîné par un dispositif « engrenage-crémaillère ». Dès lors, le mouvement de la scie automatique à empannons le long dudit rail perpendiculaire est particulièrement facilité et ne nécessite pas d'effort considérable lorsqu'il est réalisé manuellement.

Avantageusement, dans la scie automatique à empannons lesdits moyens de préhension agencés pour saisir un élément en bois provenant d'un convoyeur de ladite scie automatique à lames multiples comprennent une position ouverte et une position fermée, ladite position ouverte étant une position dans laquelle ledit élément de bois sur le convoyeur n'est pas saisi par lesdits moyens de préhension et ladite position fermée étant une position dans laquelle ledit élément de bois sur ledit convoyeur est saisi par lesdits moyens de préhension.

Il est connu actuellement de coder la structure de la charpente dans une interface reliée aux moyens de commandes. Les éléments de bois, coupés à la taille voulue, sont donc produits les uns après les autres selon un ordre prédéterminé enregistré dans l'interface. Les moyens de préhension selon la présente invention sont coordonnés par lesdits moyens de commandes pour ne saisir que les éléments de bois nécessitant une coupe à empannons. Il n'est donc pas nécessaire de bouleverser l'ordre prédéterminé qui est enregistré dans l'interface, ce qui ne nécessite donc pas de programmation excessive.

De manière particulièrement préférentielle, lesdits moyens de préhension sont agencés pour être positionnés sur ledit convoyeur de ladite scie à lames multiples et comprennent un support et au moins deux doigts articulés sur ledit support, lesdits au moins deux doigts étant agencés pour être commandés par un organe de commande, par exemple comprenant un vérin pneumatique et un jeu de bielles, au moins un desdits doigts présente un mord à son extrémité non liée au support, tandis que l'autre présente une mâchoire orientable à son extrémité non liée au support, ladite position ouverte desdits moyens de préhension étant une position dans laquelle lesdits doigts, mords et mâchoires sont escamotés sous un plan d'avancement dudit élément de bois sur ledit convoyeur, par exemple par déploiement dans un plan sensiblement parallèle audit plan d'avancement dudit élément de bois, ladite position fermée desdits moyens de préhension étant une position dans laquelle lesdits doigts font saillie au travers dudit plan d'avancement dudit élément de bois, par reploiement desdits doigts, mords et mâchoires agencés pour se refermer par serrage des mâchoires de part et d'autre dudit élément de bois.

Comme on peut le constater, les moyens de préhension selon la présente invention sont particulièrement efficaces en ce qu'il permette de bloquer l'élément de bois sélectionné et le maintenir pendant le sciage. Les moyens de préhension selon la présente invention comprennent, lorsque la scie automatique à empannons comprend un chariot moteur, quatre doigts avec leurs mâchoires et mords correspondantes. Les quatre doigts font saillie deux par deux en fonction de ce qui est ordonné par les moyens de commandes selon que le chariot moteur relié à la scie circulaire est positionné pour réaliser une coupe gauche ou une coupe droite.

Dans une variante avantageuse selon la présente invention, la scie à empannons comprend un deuxième chariot moteur relié à une scie circulaire. On parle dans ce cas d'une scie automatique à empannons comprenant une tête gauche et une tête droite. Chaque tête étant prévue pour être déplacée dans une partie dudit rail de guidage au moins partiellement circulaire. Dans ce cas, les moyens de préhension peuvent ne comporter que deux doigts et leurs mâchoires correspondantes.

Les pinces, plus particulièrement la position des doigts peut-être réglés en fonction de l'épaisseur du bois manuellement ou automatiquement par programmation.

Il est en outre avantageux que lesdites mâchoires soient montées sur des éléments élastiques auxdits doigts, lesdits éléments élastiques étant agencés pour adapter l'écartement des mâchoires audit élément de bois.

Dans une forme de réalisation préférentielle, la scie automatique à empannons selon la présente invention comprend en outre un moyen d'ajustement en hauteur dudit chariot moteur agencé pour permettre une coupe à empannons avec talon, par exemple par ajustement en hauteur dudit rail de guidage rectiligne.

De préférence, dans la scie automatique à empannons selon la présente invention, ladite pièce mobile comporte une glissière à référence, agencée pour positionner le chariot moteur à gauche ou à droite dudit élément de bois, ledit positionnement étant de préférence commandé automatiquement par les moyens de commandes. Cette glissière de référence permet un réglage radial de la scie circulaire reliée au chariot moteur. Ceci permet donc de tenir compte de l'épaisseur dudit élément de bois lors d'une coupe à gauche ou d'une coupe à droite et de pouvoir déplacer la lame radicalement, sachant que la face de référence du bois est tantôt en amont tantôt en aval. Le chariot moteur peut donc se déplacer le long de l'axe du sens d'avancement dudit élément de bois selon deux positions extrêmes correspondants chacune à une extrémité de ladite glissière.

D'autres formes de réalisation de la scie automatique à empannons selon la présente invention sont mentionnées dans les revendications annexées.

La présente invention se rapporte également à un système automatique de scies comprenant :
- une scie à lames multiples comprenant un convoyeur agencé pour transporter des éléments de bois, un ensemble de scies, situées de part et d'autre dudit convoyeur, agencé pour couper un élément de bois à une longueur souhaitée dans un premier temps et pour réaliser un onglet à l'une ou l'autre extrémité dudit élément de bois par inclinaison d'une des lames dans un plan transversal incliné par rapport à un axe longitudinal, au fur et à mesure du transports desdits éléments de bois,
- au moins une scie à empannons selon la présente invention, et
- des moyens d'ajustement de la position réciproque de ladite scie à lames multiples et de ladite scie à empannons, pour définir un point 0 de référence sur base duquel chaque lame est positionnée par lesdits moyens de commande.

Dans un tel système, il est en outre avantageux et le convoyeur soit prolongé au-delà de ladite scie à lames multiples de façon à permettre que ledit élément de bois sortant de ladite scie à lames multiples soit directement saisi, lorsqu'il est détecté, par lesdits moyens de préhension et qu'il ne soit pas nécessaire de le convoyer vers un autre point où la coupe à empannons sera réalisée. D'ailleurs, pendant l'avancement dudit élément de bois, une rainure est fraisée dans l'élément de bois qui engage une plaque en saillie à l'extrémité ne nécessitant pas de coupe en empannon pour le stabiliser pendant la coupe.

Selon la présente invention, la scie automatique à empannons peut-être reliée à une scie à lames multiples existantes auquel cas, soit le convoyeur est prolongé, soit le moyen de préhension achemine ledit élément de bois dudit convoyeur existant vers une autre base ou un autre convoyeur à proximité de ladite scie à empannons.

Dans ce cas, bien entendu, il y aura lieu de prévoir que lesdits moyens de commandes soient compatibles avec les moyens de commandes de la scie à lames multiples existantes.

Dans le système selon l'invention, la scie à la multiple est directement équipée d'une scie à empannons, la scie automatique à empannons est positionnée par l'intermédiaire du rail de guidage perpendiculaire au sens d'avancement des éléments de bois sur le convoyeur, plus particulièrement dans une glissière de circulation de billes posée au sol. Lorsqu'une coupe à empannons doit être réalisée, l'élément de bois à couper d'empannon est repéré par lesdits moyens de commandes, saisi par lesdits moyens de préhension, le convoyeur est brièvement immobilisé, la scie circulaire sur le chariot moteur est positionnée en fonction de la coupe d'empannon à réaliser, la coupe d'empannons est réalisée, le convoyeur est remis en marche et le dit élément de bois ainsi coupé est acheminé vers sa destination finale, par exemple sur un empileur.

Le convoyeur est en moyenne immobilisé pendant une durée de six secondes ce qui est une durée particulièrement acceptable, qui ne réduit pratiquement pas le rendement du système selon l'invention ou de l'ensemble scie à lames multiples existante et scie à empannons selon l'invention.

D'autres formes de réalisation du système selon l'invention sont mentionnées dans les revendications annexées.

D'autres caractéristiques, détails et avantages de l'invention ressortiront de la description donnée ci-après, à titre non limitatif et en faisant référence aux dessins annexés.
La figure 1 est une vue en perspective d'une scie automatique à empannons selon la présente invention
La figure 2 est une vue en perspective du rail de guidage perpendiculaire au sens d'avancement desdits éléments de bois sur le convoyeur.
La figure 3 est en perspective desdits moyens de préhension selon l'invention lorsqu'ils comportent 4 doigts.
La figure 4 est une vue d'en haut du système selon la présente invention.

Sur les figures, les éléments identiques ou analogues portent les mêmes références.

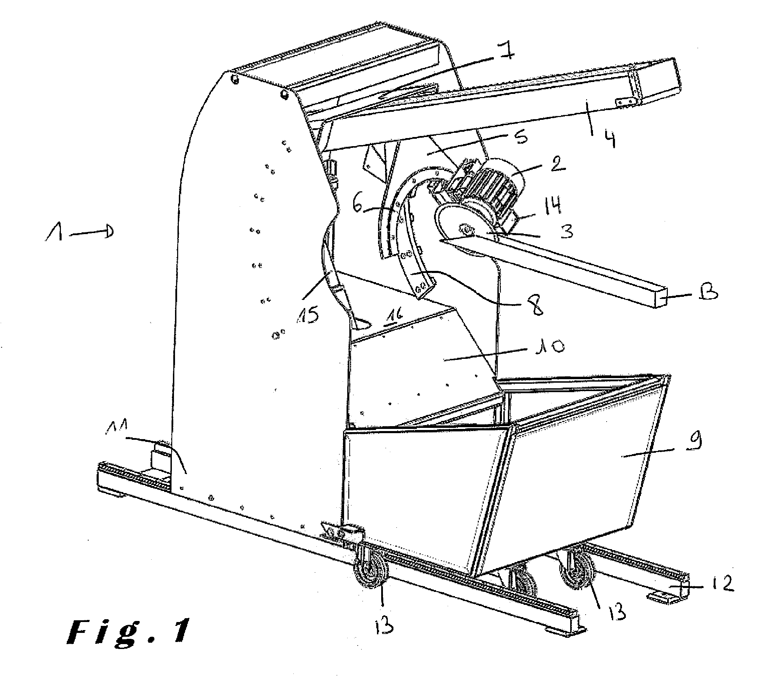

La figure 1 illustre une scie automatique à empannons 1 selon la présente invention. Comme on peut le voir, la scie automatique à empannons 1 comprend un chariot moteur 2 relié à une scie circulaire 3. La scie circulaire 3 reliée au chariot moteur 2 est agencées pour réaliser une coupe d'empannon dans un élément de bois B préalablement découpé à une extrémité à onglet d'une pente prédéterminée. Le plan de coupe de la scie circulaire 3 est perpendiculaire à l'axe longitudinal du chariot moteur 2. La scie automatique à empannons 1 comprend en outre un rail de guidage rectiligne 4, dans lequel se déplace une pièce mobile 5 reliée audit chariot moteur 2. Le rail de guidage rectiligne 4 est positionné automatiquement par des moyens de commandes (non illustrés) dans l'orientation de la pente prédéterminée de ladite extrémité sciée transversalement en onglet à laide d'une glissière courbe 8, par exemple partiellement circulaire par l'intermédiaire d'une pièce de connexion 7. Le positionnement de ladite pièce mobile 5 étant commandé par lesdits moyens de commande.

La scie automatique à empannons 1 comprend en outre un rail de guidage au moins partiellement circulaire 6 solidaire de ladite pièce mobile 5, dans lequel circule ledit chariot moteur 2 relié à ladite pièce mobile 8. Le chariot moteur 2 circule dans rail de guidage au moins partiellement circulaire 6 et son positionnement est dicté par lesdits moyens de commandes, pour procurer un plan de coupe en empannons auxdits éléments de bois B.

La scie automatique à empannons 1 comprend en outre de préférence un capot de protection qui présente une position ouverte comme illustrée et une position fermée. Le capot de protection passe de la position ouverte à la position fermée par rotation guidée par un rail courbé et lorsqu'il est fermé, il protège la lame de tout contact. La scie automatique à empannons 1 est également équipée d'un bac de récolte 9 pour la sciure, copeaux et chutes de bois. De préférence, un moyen de guidage sous la forme d'une paroi inclinée 10 est également présent pour diriger la sciure, copeaux et chutes de bois dans le bac de récolte 9. Le bac de récolte comprend, dans sa forme de réalisation illustrée des roues 13 qui permettent de le transporter pour le vidanger

La scie automatique à empannons 1 comprend aussi un support 11 guidé sur au moins un rail 12 perpendiculaire au sens d'avancement dudit élément en bois B, provenant du convoyeur de ladite scie à lames multiples.

De plus, comme on l'a dit précédemment, ladite pièce mobile 5 comporte une glissière à référence 14, agencée pour positionner le chariot moteur à gauche ou à droite dudit élément de bois B, ledit positionnement étant de préférence commandé automatiquement par les moyens de commandes.

Un vérin électrique 15 commandé par un organe moteur (non illustré) situé dans le bloc moteur 16, sous la paroi inclinée 10 actionne le rail de guidage rectiligne 4 pour le positionné selon la pente prédéterminée.

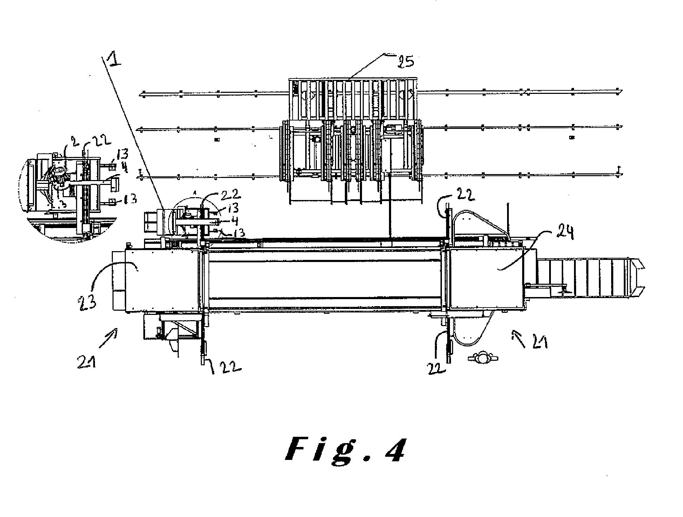

Le fonctionnement de la scie automatique à empannons 1 selon la présente invention sera décrit plus en détail ci-dessous en faisant référence à la figure 4.

Brièvement, un élément de bois B est saisi par les moyens de préhension et la lame de la scie circulaire 3 reliée au chariot moteur 2 est positionnée de manière adéquate pour effectuer la coupe d'empannons prédéterminée. La coupe d'empannons prédéterminée a été codée préalablement dans l'interface qui transmet l'information au moyen de commandes. Les moyens de commandes agissent sur le positionnement du rail de guidage rectiligne 4 afin de le mettre en conformité avec la pente prédéterminée de l'onglet à une extrémité de l'élément de bois B. Dans ce rail de guidage rectiligne 4, la pièce mobile 5 avance et recule pour effectuer la coupe d'empannon et le chariot moteur 2 est positionné dans le rail des guidages au moins partiellement circulaire 6 selon la coupe d'empannons à réaliser. Les déchets, chute et copeaux sont récupérés dans le bac de récolte 9. Les moyens de préhension passent alors en position ouverte, ledit élément de bois B peut alors être acheminé en aval de la scie automatique à empannons 1 pour être récupéré, par exemple sur un empileur.

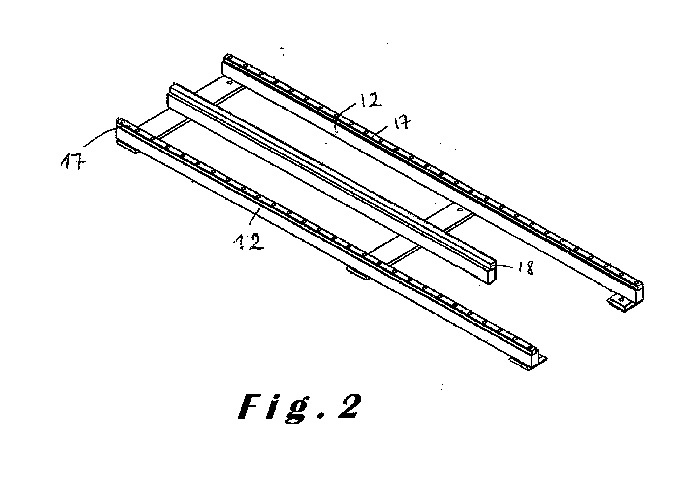

Comme on peut le voir à la figure 2, dans la scie automatique à empannons, ledit au moins un rail perpendiculaire 12 est une glissière à recirculation de billes 17 posée au sol, ledit support étant agencé pour rouler sur ces glissières et être entraîné par un dispositif « engrenage-crémaillère » 18.

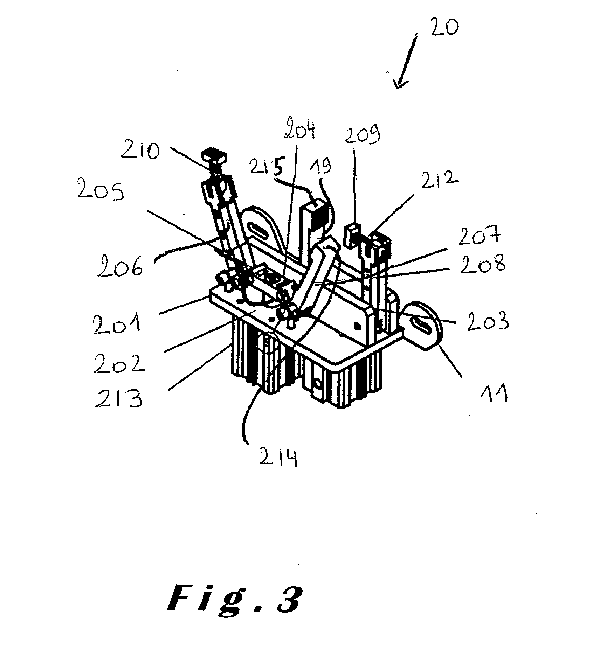

Comme on peut le voir à la figure 3, les moyens de préhension 20 entraînent une plaque de support 201 présentant au moins une surface supérieure 202 et une patte de support 203. Les moyens de préhension 20 illustrés sont ceux prévus pour une scie automatique à empannons 1 comportant un seul chariot moteur 2. Comme on l'a dit précédemment, dans ce cas, les moyens de préhension 20 comportent quatre doigts respectivement sous le numéro de référence 19, 206, 207 et 208. Les doigts sont agencés pour être commandés par un organe de commande, par exemple comprenant un vérin pneumatique 213 et un jeu de bielles 204 et 205, et deux doigts présentent à leur extrémité non liée au support un mord 215, 214, les deux autres doigts, chacun faisant face à un doigt muni d'un mord présentent chacun, à leur extrémité non liée au support, au moins une mâchoire orientable 209, 210.

Les mâchoires 209, 210 sont montées sur des éléments élastiques 212 auxdits doigts, lesdits éléments élastiques 212 étant agencés pour adapter l'écartement des mâchoires audit élément de bois.

Lesdits moyens de préhension 20 sont agencés pour être positionnés sur ledit convoyeur de ladite scie à lames multiples et pour saisir un élément en bois provenant d'un convoyeur de ladite scie automatique à lames multiples comprennent une position ouverte et une position fermée, ladite position ouverte étant une position dans laquelle ledit élément de bois sur le convoyeur n'est pas saisi par lesdits moyens de préhension 20 et ladite position fermée étant une position dans laquelle ledit élément de bois sur ledit convoyeur est saisi par lesdits moyens de préhension 20.

La position ouverte desdits moyens de préhension 20 est une position dans laquelle lesdits doigts 19, 206, 207 et 208 et mâchoires 209, 210 sont escamotés sous un plan d'avancement dudit élément de bois sur ledit convoyeur, par exemple par déploiement dans un plan sensiblement parallèle audit plan d'avancement dudit élément de bois. La position fermée desdits moyens de préhension 20 est une position dans laquelle lesdits doigts 19, 206, 207 et 208 font saillie au travers dudit plan d'avancement dudit élément de bois B, par reploiement desdits doigts (sur la forme de réalisation illustrée, les doigts 19 et 207) et mâchoire 209 qui se referment donc par serrage des mâchoires et mords de part et d'autre dudit élément de bois B.

Les moyens de préhension 20 sont donc particulièrement adaptés pour bloquer l'élément de bois sélectionné et le maintenir pendant le sciage. Les moyens de préhension selon la présente invention comprennent, lorsque la scie automatique à empannons comprend un chariot moteur, quatre doigts avec leurs mords ou mâchoires correspondantes. Les quatre doigts font saillie deux par deux en fonction de ce qui est ordonné par les moyens de commandes selon que le chariot moteur relié à la scie circulaire est positionné pour réaliser une coupe gauche ou une coupe droite.

Dans une variante avantageuse selon la présente invention, la scie à empannons comprend un deuxième chariot moteur relié à une scie circulaire. On parle dans ce cas d'une scie automatique à empannons comprenant une tête gauche et une tête droite. Chaque tête étant prévue pour être déplacée dans une partie dudit rail de guidage au moins partiellement circulaire. Dans ce cas, les moyens de préhension peuvent ne comporter que deux doigts et leurs mord et mâchoire correspondantes.

Les pinces, plus particulièrement la position des doigts peut-être réglés en fonction de l'épaisseur du bois manuellement ou automatiquement par programmation.

Comme on peut le voir à la figure 4, la présente invention se rapporte également à un système automatique de scies comprenant une scie à lames multiples 21. La scie à lames multiples 21. comprend un convoyeur 22 agencé pour transporter des éléments de bois au niveau de leurs extrémités, par exemple sous la forme de chaînes de transport 22 ou d'un tapis étroit convoyeur 22. La scie à lames multiples 21 comprend un module fixe 23 et un module mobile 24. Chaque module 23 et 24 comprend un ensemble de scies situées de part et d'autre dudit convoyeur 22, et dans la forme de réalisation illustrée, le nombre de scies dans chaque module est de deux. De part et d'autre du convoyeur 22, la première scie est agencée pour couper un élément de bois à une longueur souhaitée et la deuxième scie est agencée pour réaliser un onglet à l'une ou l'autre extrémité dudit élément de bois par inclinaison de la deuxième lame dans un plan transversal incliné par rapport à un axe longitudinal, au fur et à mesure du transports desdits éléments de bois.

Le système selon l'invention comprend donc également une scie à empannons automatique selon l'invention, telle que décrite ci avant. Comme on peut le voir à la figure quatre, les moyens de préhension illustrés 20 sont en position ouverte, c'est-à-dire escamotés sous le plan d'avancements desdits éléments de bois.

Le système selon l'invention comprend des moyens d'ajustement de la position réciproque de ladite scie à lames multiples et de ladite scie à empannons, pour définir un point 0 de référence sur base duquel chaque lame est positionnée par lesdits moyens de commande. Ces moyens d'ajustement de la position réciproque de la scie à lames multiples et de la scie à empannons sont en pratique réalisés par le rail de guidage dans lequel la scie d'empannons 1 circule. Le mouvement perpendiculaire au sens d'avancement desdits éléments de bois de la scie à empannons 1 permet de positionner la lame de la scie circulaire en fonction du point 0 de référence.

Dans un tel système, il est en outre avantageux que le convoyeur 22 soit prolongé au-delà de ladite scie à lames multiples de façon à permettre que ledit élément de bois sortant de ladite scie à lames multiples soit directement saisi, lorsqu'il est détecté, par lesdits moyens de préhension 20 et qu'il ne soit pas nécessaire de le convoyer vers un autre point où la coupe à empannons sera réalisée.

Bien entendu, dans une variante selon l'invention, la scie automatique à empannons 1 peut-être reliée à une scie à lames multiples 21 existante. Dans ce cas, bien entendu, il y aura lieu de prévoir que lesdits moyens de commandes soient compatibles avec les moyens de commandes de la scie à lames multiples existantes.

Dans le système selon l'invention, la scie à lames multiples 21 est directement équipée d'une scie à empannons 1. La scie automatique à empannons 1 est positionnée par l'intermédiaire du rail de guidage perpendiculaire 13 au sens d'avancement des éléments de bois B sur le convoyeur 22, plus particulièrement dans une glissière de circulation de billes posée au sol. Lorsqu'une coupe à empannons doit être réalisée, l'élément de bois B à couper d'empannon est repéré par lesdits moyens de commandes, saisi par lesdits moyens de préhension 20, le convoyeur 22 est brièvement immobilisé, la scie circulaire 3 sur le chariot moteur 2 est positionnée en fonction de la coupe d'empannon à réaliser, la coupe d'empannons est réalisé, le convoyeur 22 est remis en marche et le dit élément de bois B ainsi coupé est acheminé vers sa destination finale, par exemple sur un empileur 25.

Le convoyeur est en moyenne immobilisée pendant une durée de six secondes ce qui est une durée particulièrement acceptable, qui ne réduit pratiquement pas le rendement du système selon l'invention ou de l'ensemble scie à lames multiples existante et scie à empannons selon l'invention.

Il est bien entendu que la présente invention n'est en aucune façon limitée aux formes de réalisations décrites ci-dessus et que bien des modifications peuvent y être apportées sans sortir du cadre des revendications annexées.

Par exemple, les moyens de commandes peuvent comprendre plusieurs moyens de commande séparés indépendants, manuels ou automatique ou collaborant ensemble.

En outre, on peut prévoir que le système selon l'invention comprenne une deuxième scie automatique d'empannons, à l'autre extrémité pour produire des éléments de bois à coupe d'empannon de chaque côté. Dans ce cas, il faudra prévoir que la scie multilame mobile puisse être convoyée pour ajuster la longueur seule et avec la scie automatique d'empannon par commande.

## Revendications

1. Scie automatique à empannons (1) agencée pour être assemblée à une scie automatique à lames multiples (2) comprenant
- des moyens de préhension (20) commandés par des moyens de commande agencés pour saisir un élément en bois (B) provenant d'un convoyeur (22) de ladite scie automatique à lames multiples (21) et présentant au moins une extrémité sciée transversalement par rapport à un axe longitudinal dudit élément de bois (B), perpendiculairement ou en oblique,
- un chariot moteur relié à une scie circulaire (3) dont le plan de coupe est perpendiculaire à l'axe longitudinal du chariot moteur (2), ledit chariot moteur (2) étant déplaçable dans les trois dimensions de l'espace,
- un rail de guidage rectiligne (4), dans lequel se déplace une pièce mobile (5) reliée audit chariot moteur (2) agencé pour guider ladite scie circulaire lors de la coupe d'empannon, ledit rail de guidage rectiligne (4) étant positionné optionnellement automatiquement par les moyens de commandes dans l'orientation de la pente de ladite extrémité sciée transversalement, ladite pièce mobile (5) étant commandée par lesdits moyens de commande,
- un rail de guidage au moins partiellement circulaire (6), dans lequel circule ledit chariot moteur (2) relié à ladite pièce mobile (5), ladite pièce mobile (5) étant solidaire dudit rail de guidage au moins partiellement circulaire (6) dans lequel ledit chariot moteur (2) circule, et dont le positionnement est dicté par lesdits moyens de commandes, pour procurer un plan de coupe en empannons auxdits éléments de bois (B).

2. Scie automatique à empannons (1) selon la revendication 1, dans laquelle ledit rail de guidage rectiligne (4) est orienté selon la pente de ladite extrémité sciée transversalement par une glissière (8) courbe, par exemple partiellement circulaire, de préférence automatiquement.

3. Scie automatique d'empannons (1) selon la revendication 2, dans laquelle ledit rail de guidage rectiligne (4) est relié à ladite glissière (8) par un élément de connexion (7).

4. Scie automatique à empannons (1) selon l'une quelconque des revendications 1 à 3, comprenant en outre un support (11) guidé sur au moins un rail (12) perpendiculaire au sens d'avancement dudit élément en bois (B), provenant du convoyeur (22).

5. Scie automatique à empannons (1) selon l'une quelconque des revendications 1 à 4, dans laquelle ledit au moins un rail perpendiculaire (12) est une glissière (17) à recirculation de billes posée au sol, ledit support étant agencé pour rouler sur ces glissières et être entraîné par un dispositif « engrenage-crémaillère » (18).

6. Scie automatique à empannons (1) selon l'une quelconque des revendications 1 à 5, dans lequel lesdits moyens de préhension (20) agencés pour saisir un élément en bois provenant d'un convoyeur (22) de ladite scie automatique à lames multiples (21) comprennent une position ouverte et une position fermée, ladite position ouverte étant une position dans laquelle ledit élément de bois (B) sur le convoyeur (22) n'est pas saisi par lesdits moyens de préhension (20) et ladite position fermée étant une position dans laquelle ledit élément de bois (B) sur ledit convoyeur (22) est saisi par lesdits moyens de préhension (20).

7. Scie automatique à empannons (1) selon la revendication 6, dans laquelle lesdits moyens de préhension (20) sont agencés pour être positionnés sur ledit convoyeur (22) de ladite scie à lames multiples (21) et comprennent un support (201, 202) et au moins deux doigts (19, 206, 207, 208) articulés sur ledit support (201, 202), lesdits au moins deux doigts (19, 206, 207, 208) étant agencés pour être commandés par un organe de commande, par exemple comprenant un vérin pneumatique (213) et un jeu de bielles (204, 205), au moins un desdits doigts (19, 206, 207, 208) présente un mord (214, 215) à son extrémité non liée au support, tandis que l'autre présente une mâchoire orientable (209, 210) à son extrémité non liée au support (201, 202), ladite position ouverte desdits moyens de préhension (20) étant une position dans laquelle lesdits doigts (19, 206, 207, 208), mords (214, 215) et mâchoires (209, 210) sont escamotés sous un plan d'avancement dudit élément de bois (B) sur ledit convoyeur (22), par exemple par déploiement dans un plan sensiblement parallèle audit plan d'avancement dudit élément de bois (B), ladite position fermée desdits moyens de préhension étant une position dans laquelle lesdits doigts (19, 206, 207, 208) font saillie au travers dudit plan d'avancement dudit élément de bois (B), par reploiement desdits doigts (19, 206, 207, 208) mords (214, 215) et mâchoires (209, 210) agencés pour se refermer par serrage des mâchoires de part et d'autre dudit élément de bois.

8. Scie automatique à empannons (1) selon la revendication 7, dans laquelle lesdites mâchoires (209, 210) sont montées sur des éléments élastiques (212) auxdits doigts (19, 206, 207, 208), lesdits éléments élastiques (212) étant agencés pour adapter l'écartement des mâchoires (209, 210) audit élément de bois (B).

9. Scie automatique à empannons (1) selon l'une quelconque des revendications précédentes, comprenant en outre un moyen d'ajustement en hauteur dudit chariot moteur (2) agencé pour permettre une coupe à empannons avec talon, par exemple par ajustement en hauteur dudit rail de guidage rectiligne (4).

10. Scie automatique à empannons (1) selon l'une quelconque des revendications précédentes, dans lequel ladite pièce mobile (5) comporte une glissière (14) à référence, agencée pour positionner le chariot moteur (2) à gauche ou à droite dudit élément de bois (B), ledit positionnement étant de préférence commandé automatiquement par les moyens de commandes.

11. Système automatique de scies comprenant :
- une scie à lames multiples (21) comprenant un convoyeur (22) agencé pour transporter des éléments de bois (B), un ensemble de scies situées de part et d'autre dudit convoyeur, agencé pour couper un élément de bois (B) à une longueur souhaitée dans un premier temps et pour réaliser un onglet à l'une ou l'autre extrémité dudit élément de bois (B) par inclinaison d'une des lames dans un plan transversal incliné par rapport à un axe longitudinal, au fur et à mesure du transports desdits éléments de bois (B),
- une scie à empannons (1) selon l'une quelconque des revendications 1 à 10, et
- des moyens d'ajustement (12) de la position réciproque de ladite scie à lames multiples (21) et de ladite scie à empannons (1), pour définir un point 0 de référence sur base duquel chaque lame est positionnée par lesdits moyens de commande.
